# EUROPÄISCHE PATENTSCHRIFT

(11) **EP 0 976 990 B1**
(45) Veröffentlichungstag und Bekanntmachung des Hinweises auf die Patenterteilung: **22.09.2004**
(21) Anmeldenummer: 99112812.5
(22) Anmeldetag: 02.07.1999
(51) Int. Cl.: F24H 9/18, F24H 3/06, F24H 3/08

(54) **Heizgerät mit gekühlter Dichtfläche**
Heater with cooled sealing surface
Réchauffeur avec surface d'étanchéité refroidie

(30) Priorität: 28.07.1998 DE 19833976
(43) Veröffentlichungstag der Anmeldung: 02.02.2000
(73) Patentinhaber: Truma Gerätetechnik GmbH & Co., 85640 Putzbrunn (DE)
(72) Erfinder: Fricke, Gerd, Dr., 85630 Neukeferloh (DE); Jäger, Markus, 85640 Putzbrunn (DE)
(74) Vertreter: Müller - Hoffmann & Partner

(56) Entgegenhaltungen:
- DE-C- 3 328 591
- GB-A- 2 312 719
- US-A- 5 368 011

## Beschreibung

Die Erfindung betrifft ein atmosphärisches Heizgerät gemäß dem Oberbegriff von Patentanspruch 1.

Derartige Heizgeräte werden vorzugsweise in Wohnwagen und Reisemobilen zur Beheizung des Innenraums oder auch zur Erwärmung von Wasser eingesetzt. Dazu wird Brenngas, z.B. Butan, durch einen atmosphärischen Brenner verbrannt und die Verbrennungswärme durch einen Wärmetauscher in der gewünschten Weise gewandelt. Derartige Heizgeräte müssen raumluftunabhängig betrieben werden, d.h., sie dürfen die für die Verbrennung erforderliche Luft nicht aus dem zu erwärmenden Raum beziehen, da dies für die sich in dem Raum aufhaltenden Menschen schädlich sein könnte. Daher wird die Verbrennungsluft von der Umgebung außerhalb des Wohnwagens zugeführt.

Bei einem aus der DE 33 28 591 C1 bekannten Heizgerät dieser Art wird der Brenner in einer Schale von unten an den Wärmetauscher montiert. Dies hat den Vorteil, daß eine Dichtstelle zwischen dem Wärmetauschergehäuse und der Schale auch im Betrieb relativ kalt bleibt, da die Flammenaustrittsfläche des Brenners über der Dichtstelle liegt. Nachteilig ist hingegen, daß bei Wartungsund Reparaturarbeiten am Brenner die Heizung vollständig ausgebaut und zerlegt werden muß.

An der Dichtstelle wird eine gestanzte Flachdichtung aus hitzebeständigem Material, z.B. Novapress®, eingesetzt. Dieses Material ist zwar hochtemperaturbeständig bis ca. 400 °C, jedoch besteht eine Setzneigung, so daß in regelmäßigen Abständen ein Nachziehen der den Brenner und die Schale mit dem Wärmetauschergehäuse verbindenden Schrauben erforderlich ist. Darüber hinaus entgasen Weichmacher aus dem Dichtungsmaterial, wodurch die Dichtung spröde wird. Außerdem klebt die Dichtung an den Dichtflächen an, so daß sie beim Trennen der Teile zerreißt und jedesmal erneuert werden muß. Schließlich ist die Herstellung der Dichtung als Stanzteil sehr teuer.

Bei einem anderen bekannten Heizgerät wird keine Dichtung benötigt, da sich die Trennstelle zwischen dem Wärmetauscher und einem den Brenner aufnehmenden Ansaugkasten außerhalb des Fahrzeugs befindet, so daß stets eine raumluftunabhängige Betriebsweise der Heizung gewährleistet ist. Bei dieser Heizung besteht jedoch das Problem, daß die außenliegenden Aggregate zusätzlich gegen Korrosion und mechanische Beschädigung, z.B. durch während der Fahrt hochgeschleuderte Steine, geschützt werden müssen, was den baulichen Aufwand beträchtlich erhöht. Auch dieses Heizgerät muß zu Wartungs- und Reparaturzwecken vollständig ausgebaut werden.

Bei der Weiterentwicklung von derartigen Heizgeräten wurde eine Lösung in Form eines raumluftunabhängigen, atmosphärischen Heizgeräts gefunden, das besonders wartungsfreundlich ist, da die Brennereinheit mit kleinstmöglichem Aufwand von dem Wärmetauschergehäuse abbaubar ist. Die Brennereinheit läßt sich seitlich in das Wärmetauschergehäuse einschieben, auch wenn die restliche Heizung vollständig eingebaut bleibt. Dazu befindet sich an dem Wärmetauschergehäuse ein Flansch, an dem die Brennereinheit von außen angeschraubt wird. Um einen raumluftunabhängigen Betrieb sicherzustellen, muß zwischen dem Flansch und einem Vorderdeckel der Brennereinheit eine Dichtung angeordnet werden. Die Dichtung verläuft teilweise oberhalb der Flammaustrittsfläche des Brenners, wodurch sie thermisch sehr belastet ist. Selbst aufwendige Maßnahmen mit teueren Dichtungsmaterialien ermöglichen es bisher nicht, die Dichtstelle zuverlässig und dauerhaft abzudichten.

Der Erfindung liegt die Aufgabe zugrunde, ein atmosphärisches Heizgerät anzugeben, mit einer zwischen einem Wärmetauschergehäuse und einer Brennereinheit vorgesehenen Dichtfläche, an der eine preiswerte, nicht zum Setzen neigende Dichtung einfach befestigt werden kann.

Erfindungsgemäß wird die Aufgabe durch ein atmosphärisches Heizgerät gelöst, mit einem Wärmetausehergehäuse; einer an einer Anschlußstelle des Wärmetauschergehäuses befestigbaren Brennereinheit; und einer zwischen der Anschlußstelle und der Brennereinheit einsetzbaren Dichtung. Das Heizgerät ist dadurch gekennzeichnet, daß die Anschlußstelle von dem Wärmetauschergehäuse abgesetzt ist und einen Flansch aufweist, mit einer an der Dichtung anliegenden, im wesentlichen vertikalen oder schräg stehenden Dichtfläche und einer im wesentlichen parallel zu der Dichtfläche und bezüglich des Flanschmaterials gegenüber von der Dichtfläche liegenden Kühlfläche.

Bei dem erfindungsgemäßen Heizgerät ist die Dichtstelle vom Wärmetauscher abgesetzt. Dadurch wird die Entfernung zwischen der an dem Brenner anstehenden Flamme und der an der Dichtfläche anliegenden Dichtung größer und die auf die Dichtfläche wirkende Wärmestrahlung verringert. Ebenso wird der Weg für die Wärmeleitung von dem durch die Flamme erwärmten Wärmetauschergehäuse zu der Dichtfläche verlängert. Die Kühlfläche ermöglicht ein Hinterlüften des Flansches und damit der Dichtfläche, so daß Wärme durch Konvektion an die Luft abgegeben wird und die Dichtflächentemperatur sinkt. Diese Maßnahmen ermöglichen ein erhebliches Absenken der Temperatur in der Dichtfläche, so daß bei einer bevorzugten Ausführungsform der Erfindung ein hitzestabilisierter Silikon-O-Ring als Dichtung eingesetzt werden kann. Der Silikon-O-Ring ist hitzestabil bis wenigstens 250 °C und weist nur geringe Setzneigung auf. Außerdem bleibt er auch über einen längeren Zeitraum materialstabil, so daß keine Weichmacher o.ä. entgasen. Da er nicht an der Dichtfläche oder einer Fläche des Brenners anklebt, sondern lediglich in eine entsprechend gestaltete Nut eingelegt wird, kann der O-Ring mehrfach verwendet werden und muß nicht nach jedem Trennen von Brennereinheit und Wärmetauschergehäuse gewechselt werden.

Bei einer besonders vorteilhaften Ausführungsform der Erfindung ist die Kühlfläche von zwischen dem Wärmetauschergehäuse und dem Flansch aufsteigender Außenluft frei umströmbar. Bei der Außenluft kann es sich auch um Luft aus dem durch die Heizung zu erwärmenden Raum handeln, da die Luft nicht in das Innere der Heizung gelangt und dort verbrannt wird, sondern lediglich der Kühlung der Kühlfläche dient.

Weitere Vorteile und Merkmale der Erfindung werden nachfolgend unter Zuhilfenahme der begleitenden Figuren näher erläutert. Es zeigen:
- **Fig. 1**: eine Perspektivansicht mit einem Wärmetauschergehäuse eines erfindungsgemäßen Heizgeräts;
- **Fig. 2**: eine weitere Perspektivansicht aus einem anderen Blickwinkel mit vergrößerter Darstellung einer Anschlußstelle bei dem erfindungsgefäßen Heizgerät; und
- **Fig. 3**: die Anschlußstelle aus Fig. 2 in Seitenansicht.

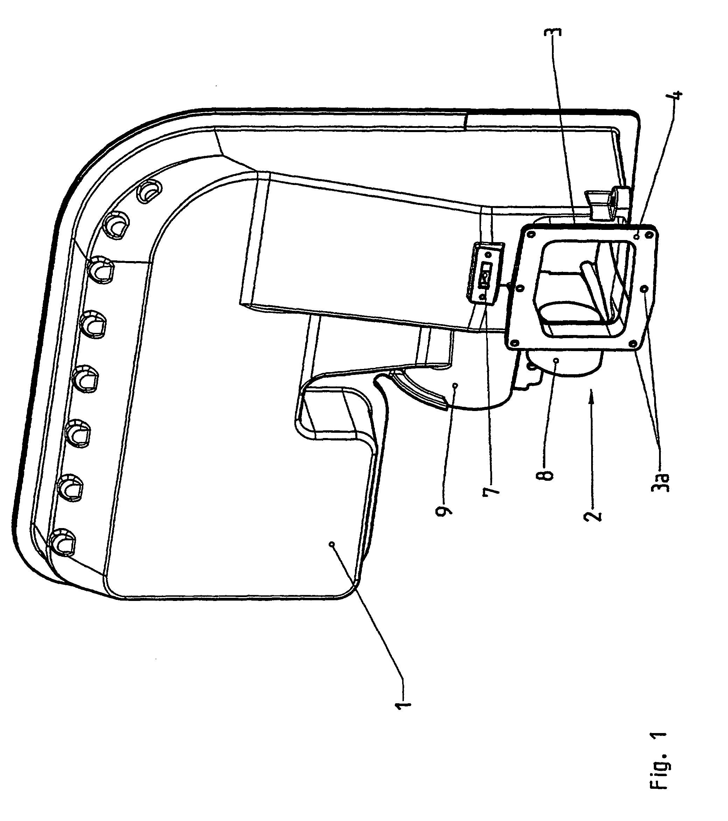

Die Figuren 1 bis 3 zeigen den gleichen Gegestand aus verschiedenen Blickwinkeln und werden nachfolgend zusammen beschrieben.

An der Vorderseite eines nur schematisch in Form einer Gehäuseschalenhälfte dargestellten Wärmetauschergehäuses 1 ist eine Anschlußstelle 2 für eine nicht dargestellte Brennereinheit ausgebildet. Die andere rückwärtige Hälfte des Wärmetauschergehäuses 1 ist aus Vereinfachungsgründen nicht dargestellt. An dem Wärmetauschergehäuse 1 sind in den Figuren nicht dargestellte Kühlflächen in an sich bekannter Weise außen angeordnet, die sich vertikal erstrecken, um bestmöglich von aufsteigender Luft durchströmt zu werden. Die Brennereinheit weist einen an sich bekannten atmosphärischen Brenner für Flüssiggas oder andere geeignete Brennstoffe auf, der in einem nicht dargestellten, bekannten Brennergehäuse angeordnet ist, das mittels Schrauben an der Anschlußstelle 2 festgeschraubt werden kann.

Die Anschlußstelle 2 weist einen Flansch 3 auf, der an seiner Vorderseite eine Dichtfläche 4 und an seiner Rückseite eine Kühlfläche 5 bildet. Die Kühlfläche 5 ist im wesentlichen parallel zu der vertikal stehenden Dichtfläche 4 angeordnet. Die Dichtfläche 4 kann bei anderen Ausführungsformen der Erfindung zur Erleichterung der Fertigung oder Montage auch schräg, d.h. mit vertikaler und horizontaler Erstreckung angeordnet werden. Die Kühlfläche 5 erstreckt sich dann ebenfalls schräg, also parallel zu der Dichtfläche 4. Sie kann jedoch auch nach wie vor trotz der schräg stehenden Dichtfläche 4 vertikal ausgerichtet sein. Weiterhin sind in dem Flansch 3 Bohrungen 3a für die Befestigungsschrauben der Brennereinheit vorgesehen.

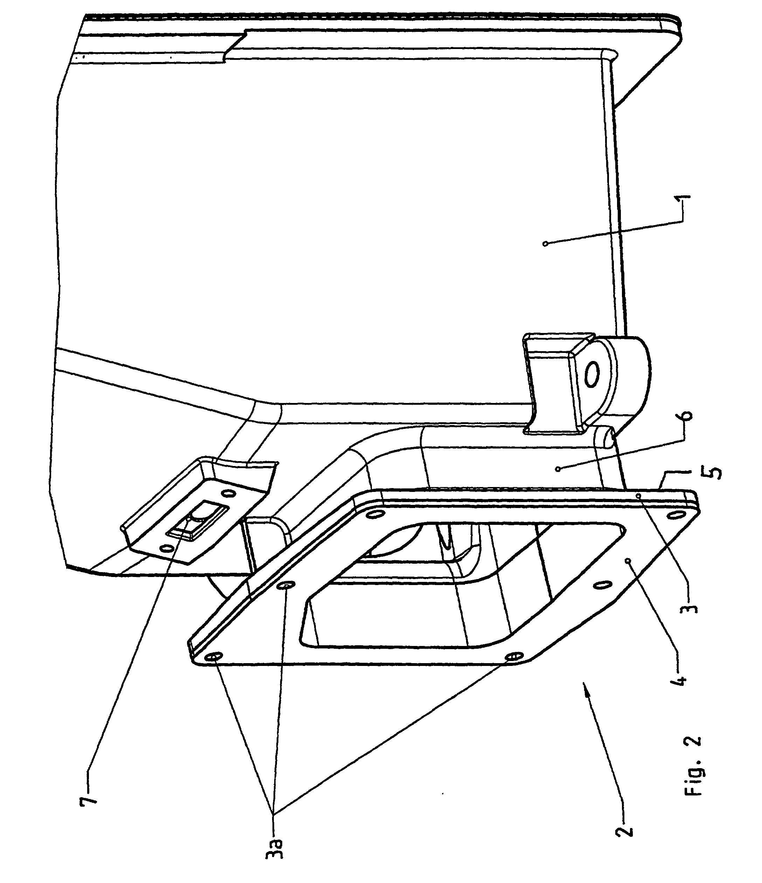

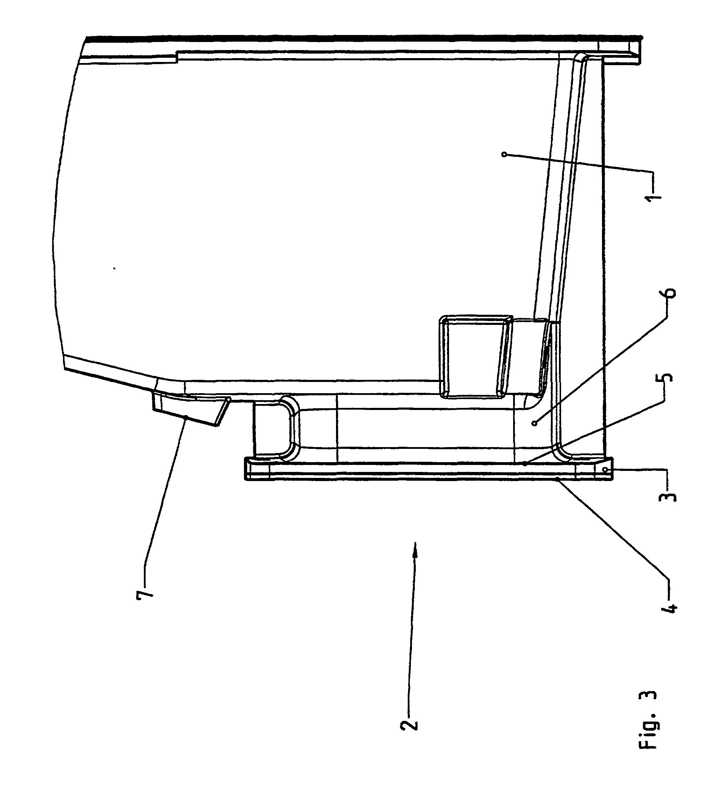

Wie insbesondere aus den Figuren 2 und 3 erkennbar ist, ist die Anschlußstelle 2 von dem Wärmetauschergehäuse 1 unter Bildung eines Kanals 6 abgesetzt. Dadurch wird die Dichtfläche 4 von dem Wärmetauschergehäuse 1 wegverlagert, so daß auch der Weg für Wärmeleitung von einem In dem Wärmetauschergehäuse vorgesehenen Steigschacht zu der Dichtfläche 4 verlängert wird.

Weiterhin ist die Dichtfläche 4 an einer vom Flammkegel des Brenners entfernten Stelle angeordnet, so daß die Erwärmung durch Strahlung minimiert wird.

Die Kühlfläche 5, wie auch der Kanal 6 können frei von Umgebungsluft umströmt werden, so daß mittels Konvektion Wärme abgeführt wird.

Die genannten Maßnahmen ermöglichen eine wirksame Kühlung der Dichtfläche, so daß Temperaturen in der Dichtfläche unterhalb von 250 °C auch bei ungünstigen Betriebszuständen erreicht werden. Die eigentliche, in den Figuren nicht dargestellte Dichtung wird in eine Nut an der Stirnfläche des Brennergehäuses angelegt. Es handelt sich dabei um eine Rundschnur- oder O-Ring-Dichtung aus Silikon. Alternativ dazu kann die Dichtung auch in einer nicht dargestellten Nut in der Dichtfläche 4 eingelegt werden. Selbstverständlich sind auch andere, entsprechend hitzebeständige Materialien für die Dichtung verwendbar. Dies insbesondere bei Dichtungen anderer Bauformen, wie z.B. Flachdichtungen, bei denen die Dichtfläche oder die Stirnfläche des Brennergehäuses keine Nut für die Aufnahme der Dichtung erfordern.

Obwohl die Flammaustrittsfläche der Brennereinheit unterhalb von zumindest einem Teil der Dichtfläche 4 angeordnet ist, wird ein Überhitzen der Dichtfläche 4 und damit eine Gefährdung der Dichtung vermieden.

Der Vollständigkeit halber sei noch erwähnt, daß das Wärmetauschergehäuse ein Sichtfenster 7 für die Überwachung der Flamme durch Augenschein aufweist. Weiterhin ist ein Seitenkanal 8 vorgesehen, durch den Frischluft für den Verbrennungsvorgang im Inneren des Wärmetauschergehäuses 1 zugeführt wird. Die Verbrennungsgase werden über einen am Ende des Wärmetauschergehäuses 1 angeordneten Auslaß 9 abgeführt.

## Patentansprüche

1. Atmosphärisches Heizgerät, mit
- einem Wärmetauschergehäuse (1);
- einer Brennereinheit, die an einer einen Flansch (3) aufweisenden Anschlußstelle (2) des Wärmetauschergehäuses (1) befestigbar ist; und
- einer zwischen der Anschlußstelle (2) und der Brennereinheit einsetzbaren und an einer Dichtfläche (4) anliegenden Dichtung;
**dadurch gekennzeichnet, daß**
- die Anschlußstelle (2) von dem Wärmetauschergehäuse (1) abgesetzt ist,
- die Dichtfläche (4) im wesentlichen vertikal oder schräg steht; und daß
- eine im wesentlichen parallel zu der Dichtfläche (4) und bezüglich des Flanschmaterials gegenüber von der Dichtfläche (4) liegende Kühlfläche (5) vorgesehen ist.

2. Heizgerät nach Anspruch 1, **dadurch gekennzeichnet, daß** die Kühlfläche (5) mit Abstand von Kühlflächen des Wärmetauschergehäuses (1) vorgesehen ist.

3. Heizgerät nach Anspruch 1 oder 2, **dadurch gekennzeichnet, daß** die Kühlfläche (5) von aufsteigender Außenluft frei umströmbar ist.

4. Heizgerät nach einem der vorstehenden Ansprüche, **dadurch gekennzeichnet, daß** eine Flammaustrittsfläche der Brennereinheit unterhalb zumindest eines Teils der Dichtfläche (4) angeordnet ist.

5. Heizgerät nach einem der vorstehenden Ansprüche, **dadurch gekennzeichnet, daß** die Dichtung eine Silikon-O-Ringdichtung ist.

## Claims

1. Atmospheric heater, with:
- a heat exchanger housing (1)
- a burner unit which can be mounted on a connecting point (2) with a flange (3), and:
- a seal which may be located on a sealing surface (4) between the connecting point (2) and the burner unit,
**characterised in that**
- the connecting point (2) is at a distance from the heat exchanger housing (1);
- the sealing surface (4) is substantially vertical or inclined, and:
- a cooling surface (5) is provided which is substantially parallel to the sealing surface (4) and in relation to the flange material opposite the seating surface (4).

2. Heater in accordance with claim 1, **characterised in that** the cooring surface (5) is provided at a distance from the heat exchanger housing (1).

3. Heater in accordance with claim 1 or 2, **characterised in that** rising external air can circulate freely around the cooling surface (5).

4. Heater in accordance with one of the aforementioned claims, **characterised in that** a flame outlet surface of the burner unit is located below at least one part of the sealing surface (4).

5. Heater in accordance with one of the above claims, **characterised in that** the seal is a silicon O-ring seal.

## Revendications

1. Appareil de chauffage atmosphérique comprenant :
- un carter d'échangeur de chaleur (1) ;
- une unité de brûleur qui est apte à être fixée à un raccord (2) dudit carter (1), pourvu d'une collerette (3) ; et
- un joint d'étanchéité qui est apte à être intercalé entre le raccord (2) et l'unité de brûleur et qui est appliqué contre une surface d'étanchéité (4) ;
**caractérisé**
- **en ce que** le raccord (2) forme un décrochement par rapport au carter d'échangeur de chaleur (1) ;
- **en ce que** la surface d'étanchéité (4) est sensiblement verticale ou inclinée ; et
- **en ce qu'**il est prévu une surface de refroidissement (5) qui est sensiblement parallèle à la surface d'étanchéité (4) et qui est située à l'opposé de celle-ci, par rapport à la matière de la collerette.

2. Appareil de chauffage selon la revendication 1, **caractérisé en ce que** la surface de refroidissement (5) est espacée des surfaces de refroidissement du carter d'échangeur de chaleur (1).

3. Appareil de chauffage selon la revendication 1 ou 2, **caractérisé en ce que** la surface de refroidissement (5) est apte à être entourée librement par l'écoulement de l'air extérieur montant.

4. Appareil de chauffage selon l'une des revendications précédentes, **caractérisé en ce qu'**une surface de sortie de flamme de l'unité de brûleur est disposée au-dessous d'une partie au moins de la surface d'étanchéité (4).

5. Appareil de chauffage selon l'une des revendications précédentes, **caractérisé en ce que** le joint d'étanchéité est un joint torique en silicone.
